(19) Europäisches Patentamt / European Patent Office / Office européen des brevets

(11) **EP 1 835 604 A1**

(12) **EUROPEAN PATENT APPLICATION**

(43) Date of publication:
**19.09.2007 Bulletin 2007/38**

(51) Int Cl.:
*H02M 3/158* (2006.01)    *H01F 1/00* (2006.01)
*H01F 1/08* (2006.01)

(21) Application number: **06425172.1**

(22) Date of filing: **16.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **STMicroelectronics S.r.l.**
**20041 Agrate Brianza (Milano) (IT)**

(72) Inventors:
• **Vai, Raimondo**
**20139 Milano (IT)**

• **Gavattari, Giuseppe**
**21052 Busto Arsizio (IT)**
• **Gritti, Giovanni**
**24124 Bergamo (IT)**

(74) Representative: **Pellegri, Alberto et al**
**Società Italiana Brevetti S.p.A.**
**Via Avegno, 6**
**21100 Varese (IT)**

(54) **Magnetic core for a coupled multi coil filter inductor**

(57)    A three phase coupled filter inductor core of a low reluctance material consists of two matching parts joined to create closed magnetic flux paths, at least one part having a planar base portion and four parallel pillars extending from a surface of the planar base, three of the pillars are spaced by a same radial distance, from the axis of a fourth pillar, centered on the planar base.

A coupled three phase filter inductor for a synchronous interleaved multiphase DC-DC buck converter, includes at least three phase coils wound on the three spaced pillars of the coupled inductor core and oriented in a way to establish an inverse magnetic coupling of any one of the three phase coils with the other two coils.

FIG. 11

EP 1 835 604 A1

**FIG. 1**

**Description**

BACKGROUND

FIELD OF THE INVENTION

The present invention relates generally to power distribution in a complex electronic system employing local DC-DC buck converters operating the conversion from a certain main power supply rail voltage to a lower output supply voltage. In particular, the invention relates to synchronous multiphase DC-DC buck converters employing a filter inductance coil on each output phase line magnetically coupled among each other.

DISCUSSION OF THE PRIOR ART

A complex electronic system is often composed of a large number of components or circuit sections functioning at different input voltages and often with extremely variable current absorption.

Power supply of the different circuitries may be implemented in a "distributed mode", by effecting a main conversion AC-DC for producing a regulated primary supply voltage that is delivered to the various subsystems and components through a single main power supply line, eventually branched, or a metallization ring. To such a main supply line connect local DC-DC converters, most often of the modular or multiphase type, that generate the required regulated supply voltage, physically near the subsystem circuit or component to be powered.

The main advantage of this approach is that the localization of the powering converter near the supplied circuit reduces line parasitic phenomena and improves the precision of regulation of the output supply voltage.

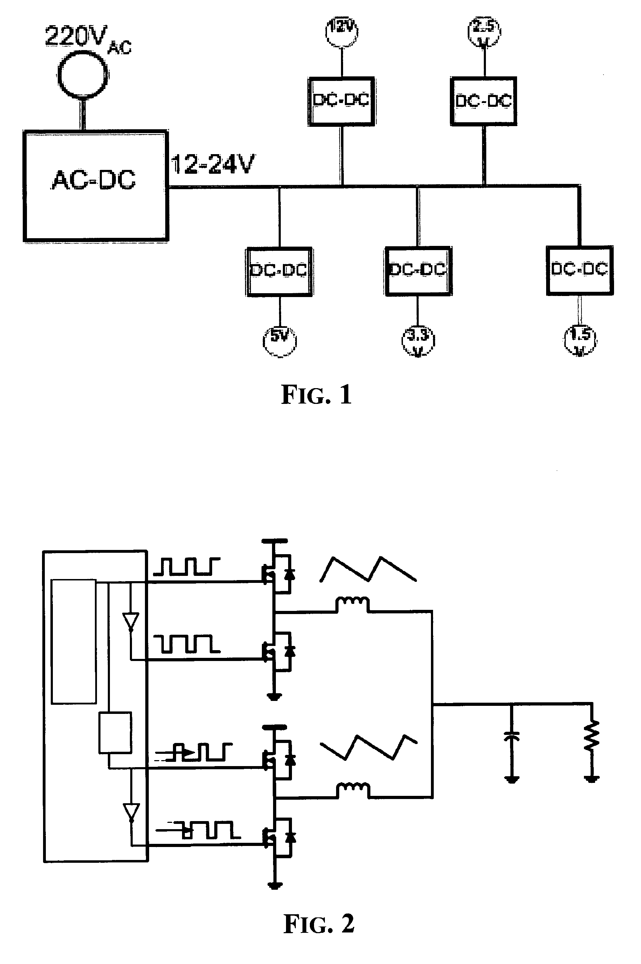

Figure 1 depicts a sample power supply distribution decentralized system as commonly employed on PC motherboards. Power supply distribution systems as the one depicted in Figure 1 are commonly referred to as POL (acronym of Point Of Load) systems.

The design of the power supply distribution on a motherboard (and an alike complex electronic system) has become more and more complicated to the point of being considered a fundamental part for developing a high performance system.

Typically, the DC-DC converters used in these systems implement a so-called droop function to reduce dissipations and parasitic phenomena during transients of the current absorption of the supplied circuits.

The mechanism of the droop function is that of regulating the output voltage in function of the load, by outputting a voltage given by the following equation:

$$Vcc = VID - R_{droop} \cdot Icc \qquad (1.1)$$

The droop function ensures that the regulation remains within the established limits for the margin of error even upon abrupt changes of the load. In fact, the inevitable parasitic effects on the output lines of a multiphase DC-DC converter cause voltage spikes on the regulated output voltage.

The droop compensation does not eliminate the spikes during the load changes, but permits to reduce the deviation of the output voltage from its value of regulation: for the same output filter characteristics, more stringent specifications can be met or the same specifications can be met without requiring the use of high precision (costly) filter components. An additional advantage is that the droop compensation permits a saving of power compared to a circuit not implementing it, equal to $R_{droop} \cdot I_{cc}^2$.

Figure 2 is a sample scheme of a synchronous multiphase buck converter.

The N-phase output modules are not driven by a single PWM signal, but by N replicas of it, out phased by an Nth of the period. This driving mode is often referred to as "interleaving". The out phasing of the current waveforms in the different output line produces a reduction of the current ripple and consequently the power dissipations tied to the rms value of the output current are reduced and permits also to increase the precision of regulation.

Moreover, the splitting of the total delivered current over more output lines (converting modules) permits a sizing of components with less stringent specifications, making thermal dissipation designing easier and eliminating the need of special components.

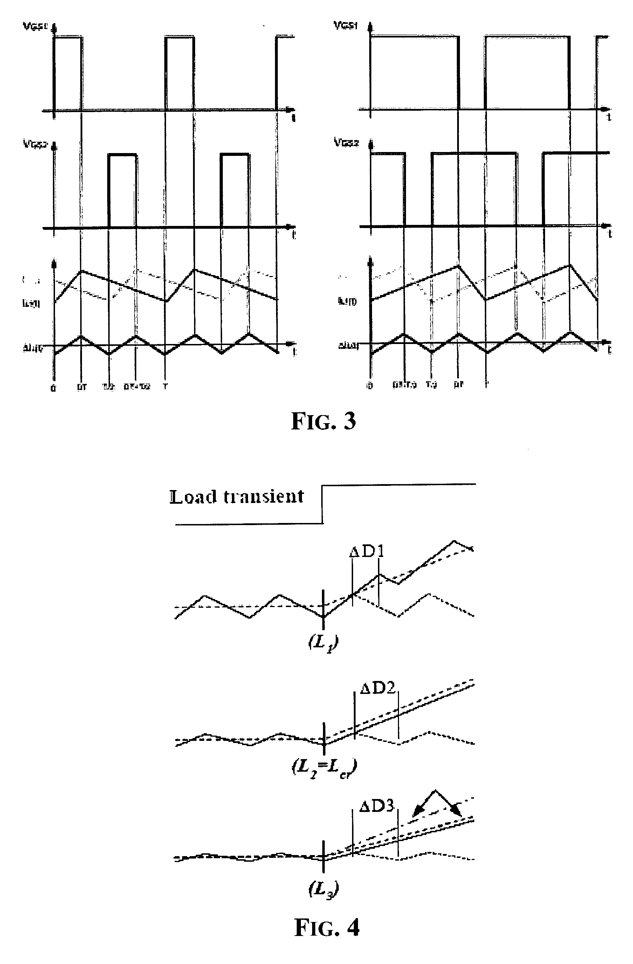

Figure 3 shows the main waveforms of a synchronous two-phase interleaved buck converter.

As can be observed the frequency of the output current ripple is double that of the ripple in the two single phase modules that compose the two-phase interleaved converter and has a reduced amplitude.

Of course, depending on whether the duty cycle D is greater or smaller than 0.5, the analytic expression of the ripple in function of the input voltage, output voltage and inductance, changes. For D=0.5 the amplitude of the output ripple becomes null because the waveform in the two modules are equal and in phase opposition.

Unfortunately, on mother boards and alike systems, power supply voltages in the order of 1.5 V - 2.0 V are produced starting from a main or primary supply voltage in the order of 12 V. This situation determines a rather low duty cycle of operation of the local DC-DC buck converters, generally in the order of 15% - 20%.

In any case, compared to a converter made with a single synchronous buck module, a reduction of the output ripple is observed for any value of duty cycle.

Typically, in mother boards, during a phase of charge the filter inductance charges under a voltage difference between the main DC voltage of about 12 V and an output voltage of about 1.5 V, whilst the discharge of the filter inductance (e.g. by switching on the low end transistor of the output half bridge) takes place under much lower output voltage of about 1.5 V.

Generally, in designing filter inductors, the best compromise is sought between contrasting requisites of inductance value for reducing the ripple amplitude and for ensuring a fast response to load variations. A low value of filter inductance (L) permits to achieve a high slew rate. By contrast, a large filter inductance (L) permits to achieve a large reduction of the ripple amplitude.

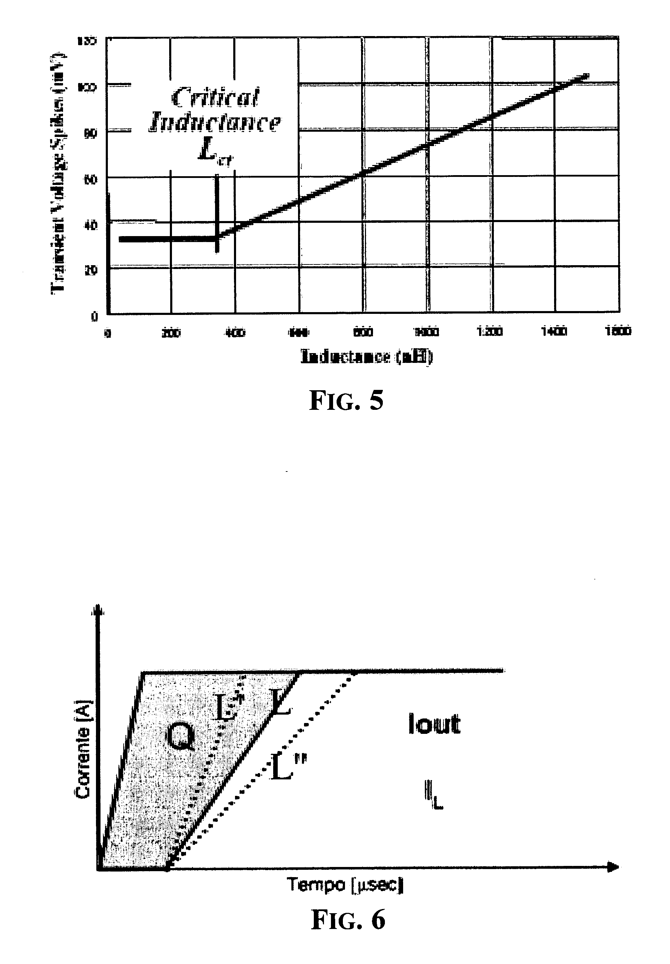

A minimum value of inductance may be analytically defined that allows to achieve the maximum variation of the duty cycle for the maximum variation of the load. This value is referred to as "critical inductance" $L_{cr}$ and Figure 4 shows the waveforms of the current in the coil for an inductance smaller ($L_1$), equal ($L_2$) and larger ($L_3$) than the critical inductance.

Figure 5 shows the amplitude of output voltage peaks during transients in function of the value of the filter inductance: that is smaller or larger than the critical inductance value.

Figure 6 illustrates a step response of the output current for different values of inductance L and the relative unbalanced net charge that is generated, which determines the amplitude of the spikes on the output voltage at transients.

In realizing multiphase DC-DC converters, there is a tendency to integrate more than one coil on a single magnetic core in order to save space on the printed circuit board. Ferrite cores have lower losses compared to powered iron, permalloy and silicon steel laminations and this has made the use of commercial "E" shape ferrite cores a preferred design choice.

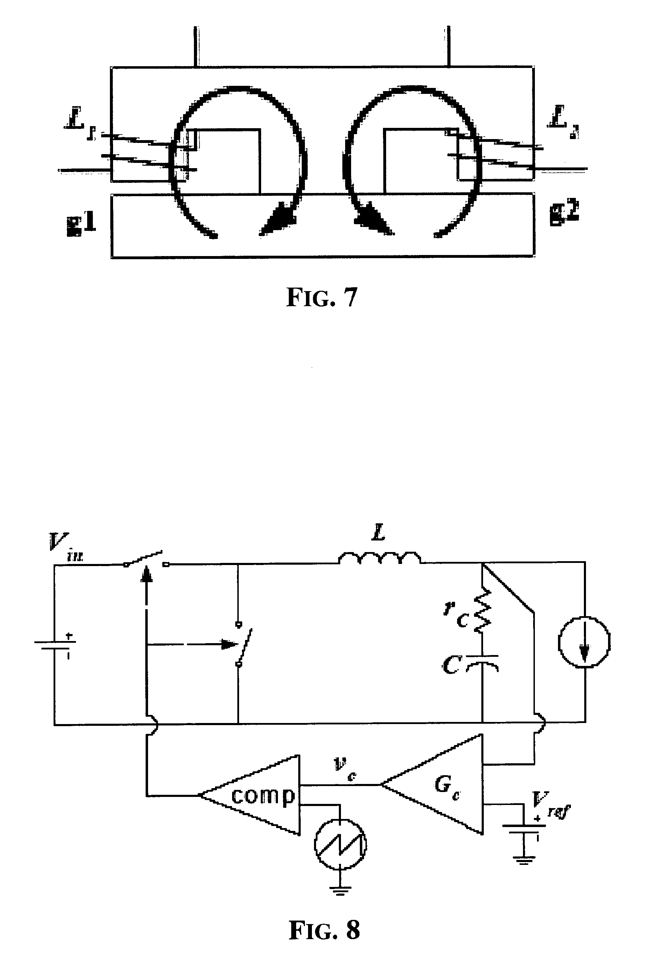

On an "E" core two coils are integrated. A coil is wound around one side leg of the E core and another coil is wound around the other side leg, as depicted in Figure 7.

A common approach is to size the central leg of the E core such to close the respective magnetic fluxes of the two phase coils $R_1$ and $R_2$ without any significant magnetic coupling between the distinct phase filter inductance coils $R_1$ and $R_2$, as schematically illustrated by the circulation arrows in Figure 7.

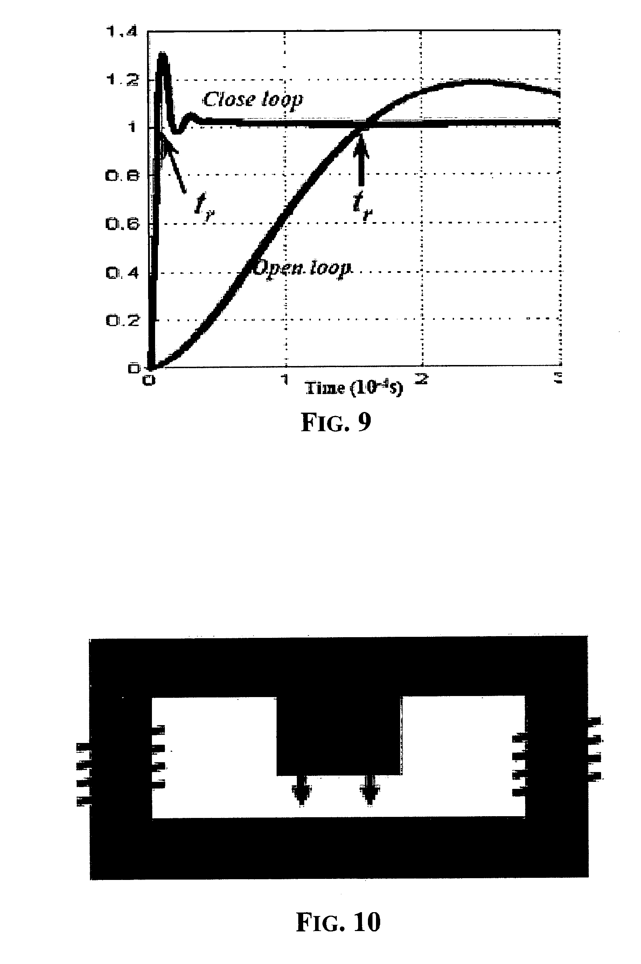

Figure 8 is a functional scheme of a synchronous buck converter in which is detailed the feedback circuit composed by the error amplifier $C_c(s)$, and Figure 9 illustrates the response characteristic of the synchronous buck converter of Figure 6 in closed loop and in open loop conditions.

By purposely increasing the reluctance of the center leg of the E shaped core in respect of the reluctance in the side legs around which are wound the phase coils, a certain degree of magnetic coupling between the coils of the two synchronous buck converter modules can be achieved with a potentially improving net effect of determining a reduced equivalent inductance value of each phase coil during load transients, this enhances the slew rate that it is possible to impose to the current in the filter inductor during an abrupt change of the output current absorbed by the supplied circuit.

Of course, this effect is achieved by establishing a so-called "inverted" magnetic coupling by orienting the coils such that the current flows in their turns in the same direction. In this way, the concatenated magnetic fluxes of the two coils subtract one from the other in the side legs of the E core, around which are wound the two phase coils of a coupled multiphase output filter inductor of a synchronous DC-DC buck converter.

In this way, it is possible to achieve dynamic performances, comparable to a magnetically uncoupled multiphase output filter inductor with inductances equal to the above-mentioned equivalent inductance value, but with a sensibly reduced current ripple, in practice equivalent to the ripple that would be determined by a multiphase output filter inductor with larger inductances (that is unreduced at transients by the mechanism of inverse magnetic coupling with the other phase filter inductance coil sharing the same magnetic core).

In practice, the inverse magnetic coupling between phase filter inductance coils of the DC-DC synchronous buck converter adds a degree of freedom in designing the output filter.

Hereinafter, reference will be made simply to coupling or to magnetic coupling between distinct output phase line filter inductance coils, intending it to be subtractive or in other words inverse.

Footprint minimization of coupled multiphase filter inductors on printed circuit board have led to the use of E-shaped cores allowing for the mutual inversed magnetic coupling on the two phase inductance coils.

When implementing multiphase DC-DC buck converters of a larger number of phases, two or more E cores are used. Typically, the number of modules (phases) is a multiple of two.

SUMMARY OF THE INVENTION

The present applicants have investigated and found that a significant advantage both in terms of a reduced footprint and of enhanced performance are achieved by employing a novel core that allows to realize on the same core three phase filter inductances of a synchronous multiphase DC-DC buck converter. The three phase coils are mutually magnetically coupled among each other through a central leg of the core.

The novel three phase coupled inductor core of the present invention consists of two matching parts each joined to create closed magnetic flux paths, at least one of which has a planar base portion and four parallel pillars extending from a surface of the planar phase, three of the pillars are spaced by the same radial distance from the axis of the fourth pillar centered on the planar base. An increased degree of mutual coupling among the three phase coils is established by increasing the reluctance of the magnetic flux circulation path through the central pillar or leg of the core. The ratio between the cross sectional area of the central pillar and the cross sectional area of the three spaced pillars of the phase coils and/or between the air gap along the central pillar and the air gap in the three spaced pillars are two design parameters that can be varied for achieving the desired mutual inductance among three phase coils of a multiphase filter inductor.

Although the self-inductances of the three phase coils may even be different from one another, preferably, the three phase magnetically coupled filter inductor has a symmetric structure thus making equal the equivalent reluctance seen by each phase coil, and has a uniform magnetic flux distribution that also renders easier to minimize core losses.

The shape that gives a maximum level of symmetry is that in which the pillars around which are wound the turns of the respective phase coil, have identical cross sectional areas, most preferably though not necessarily circular, angularly spaced among each other by 120°, such that any two adjacent coil core pillars form a reluctant path in parallel to the reluctant path passing through the fourth central pillar of the core. According to this spatial arrangement, the manner in which the magnetic flux divides itself in the plural parallel paths provided by the common core is symmetric for all the three phase coils, in other words substantially the same values of mutual inductance M are obtained.

A magnetic coupling matrix A for a three phase coupled inductor of this invention may be written for the most general case as follows:

$$A = \begin{bmatrix} L_1 & M_{12} & M_{13} \\ M_{21} & L_2 & M_{23} \\ M_{13} & M_{32} & L_3 \end{bmatrix} \qquad (4.1)$$

and, for the preferred condition where both the self-inductance L of each of the three phase coils and the mutual inductance M have the same value (perfect symmetry of the three phase inductor structure), the matrix A becomes:

$$A = \begin{bmatrix} L & M & M \\ M & L & M \\ M & M & L \end{bmatrix} \qquad (4.2)$$

In practice, such a structure realizes a circular symmetry according to which the three pillars or legs of identical size of the core, around which are wound the turns of the respective phase coils (all of the same number of turns) are spaced by 120° on a circumference centered on the axis of the fourth central pillar of the core.

BRIEF DESCRIPTION OF THE DRAWINGS

The features and advantages of the three phase coupled filter inductor of the present invention will be better recognized by the following description of a preferred embodiment and by referring to the attached drawings, wherein:

**Figure 1** is a scheme of a de-centralized power distribution system;

**Figure 2** is a simplified scheme of a synchronous multiphase DC-DC buck converter;

**Figure 3** shows the main waveforms of the synchronous two phase interleaved buck converter;

**Figure 4** shows waveform of the current in the filter coil for different values of inductance in response to a load step change;

**Figure 5** shows the amplitude of the output voltage peak during transients in function of the filter inductance;

**Figure 6** shows the step response of the output current for different values of filter inductance and the relative unbalance net charge that is generated;

**Figure 7** shows two phase filter coils integrated on a common E shaped core without establishing a significant magnetic coupling between the two coils;

**Figure 8** is a functional circuit diagram of a synchronous buck converter including an arrow amplifier in the feedback path;

**Figure 9** shows the response characteristics of the famous buck converter in open loop and closed loop;

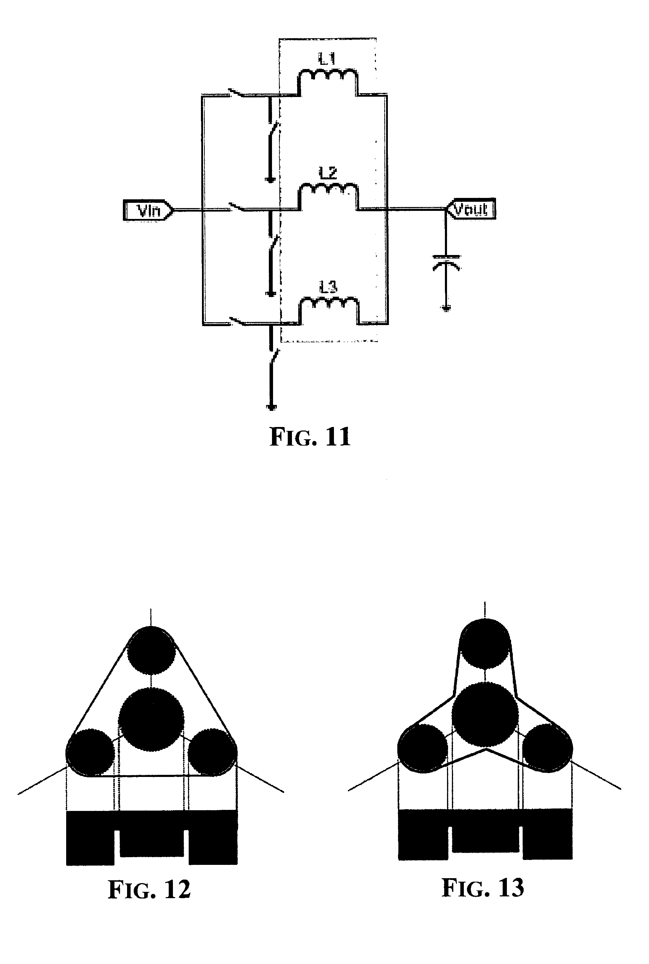

**Figure 10** shows the inverted magnetic coupling of two phase coils of a multiphase filter inductor;

**Figure 11** is a simplified scheme of a three phase synchronous buck converter employing a three phase coupled filter inductor according to the present invention;

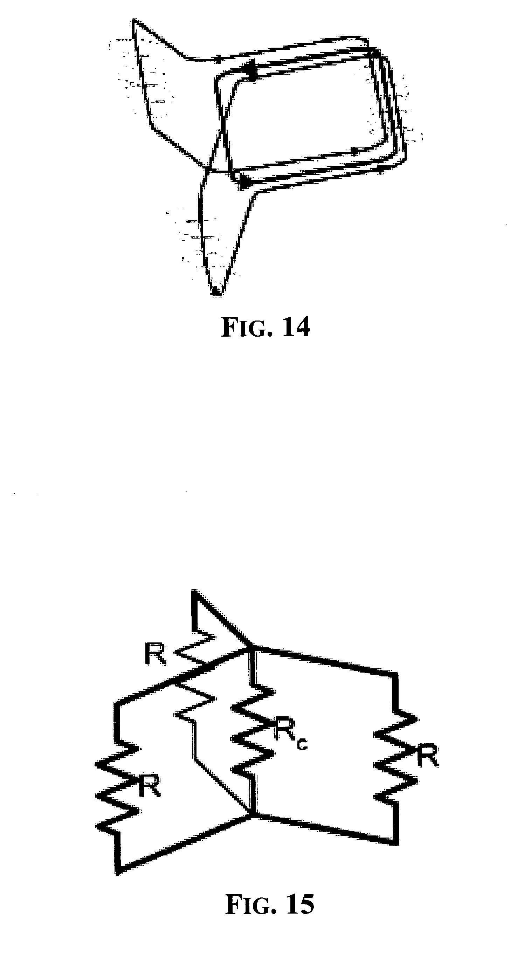

**Figure 12** and **13** show two alternative embodiments of the core of this invention for realizing a three phase coupled filter inductor;

**Figure 14** illustrates the magnetic flux paths in the three phase core of this invention;

**Figure 15** shows the equivalent passive electric network used for analyzing the relative reluctances of the various parallel magnetic flux paths of the core;

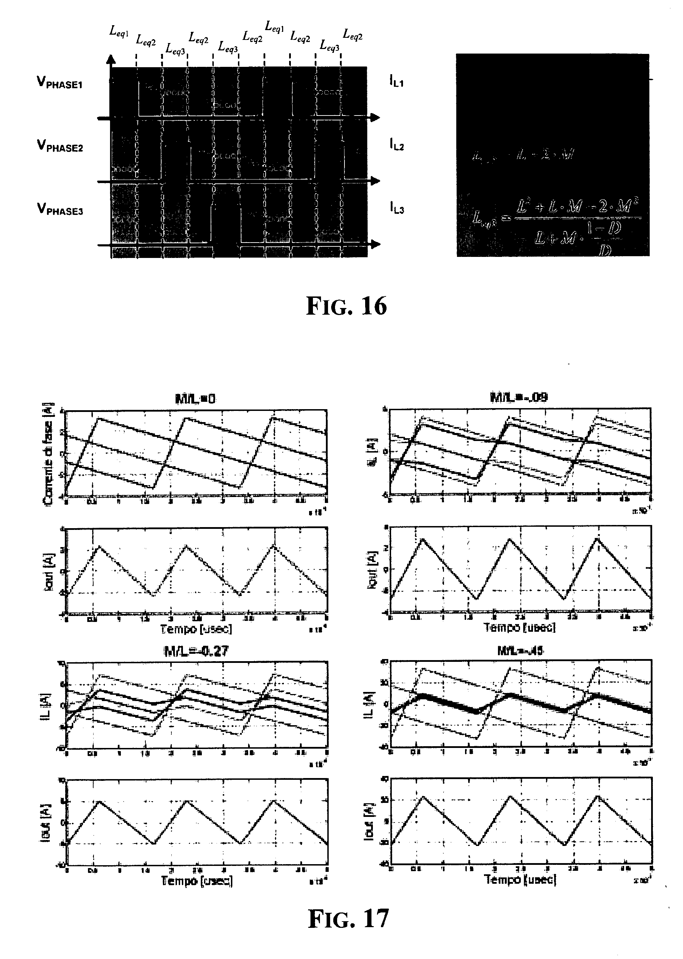

**Figure 16** illustrates a time-variant model of the structure according to which the behavior of the three phase coupled filter inductor of this invention is replicated by hypothetically using three distinct inductors the self inductance value of which changes depending on the voltage configuration applied to the multiphase filter inductor according to the indicated equations;

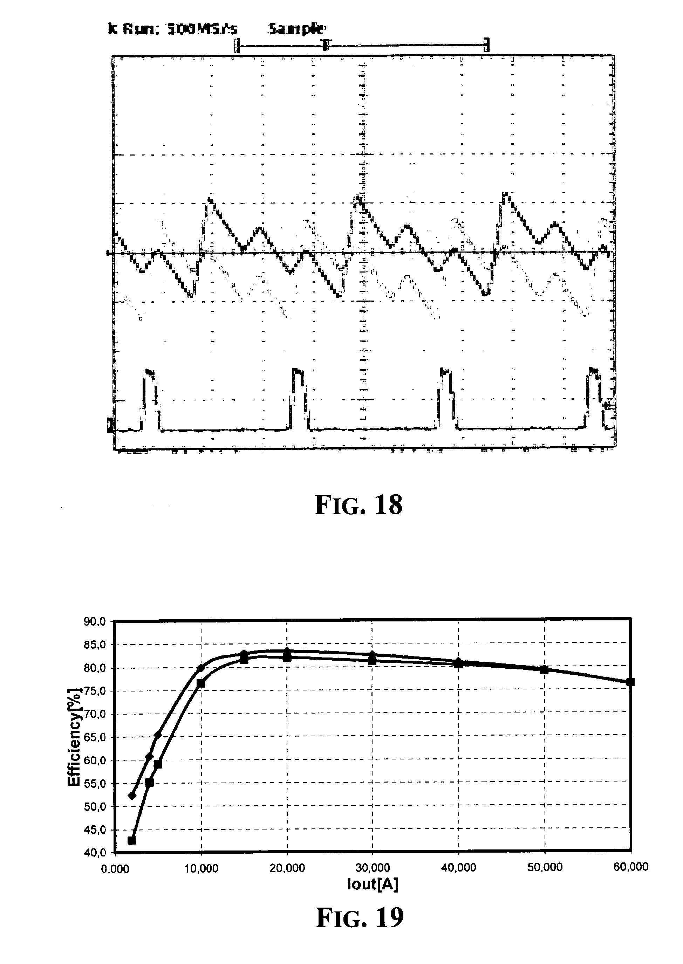

**Figure 17** shows waveforms of the current in the three phase coils and of the output current for the inverse magnetically coupled multiphase inductor, compared with the same waveforms in case of an implementation with a negligible magnetic coupling and with self inductance of the coils equal to $L_{eq2}$;

**Figure 18** shows the waveforms of the current in the three phase coils and the residual ripple on the output current for a tested sample of coupled multiphase filter inductor of this invention;

**Figure 19** is a comparison of efficiency curves of the multiphase coupled inductor of the present invention and uncoupled multiphase filter inductors of self inductance value equal to the equivalent self inductance value ($L_{eq2}$);

**Figure 20** shows the waveforms of the current in the three coils of the multiphase coupled inductor of the present invention during load transients;

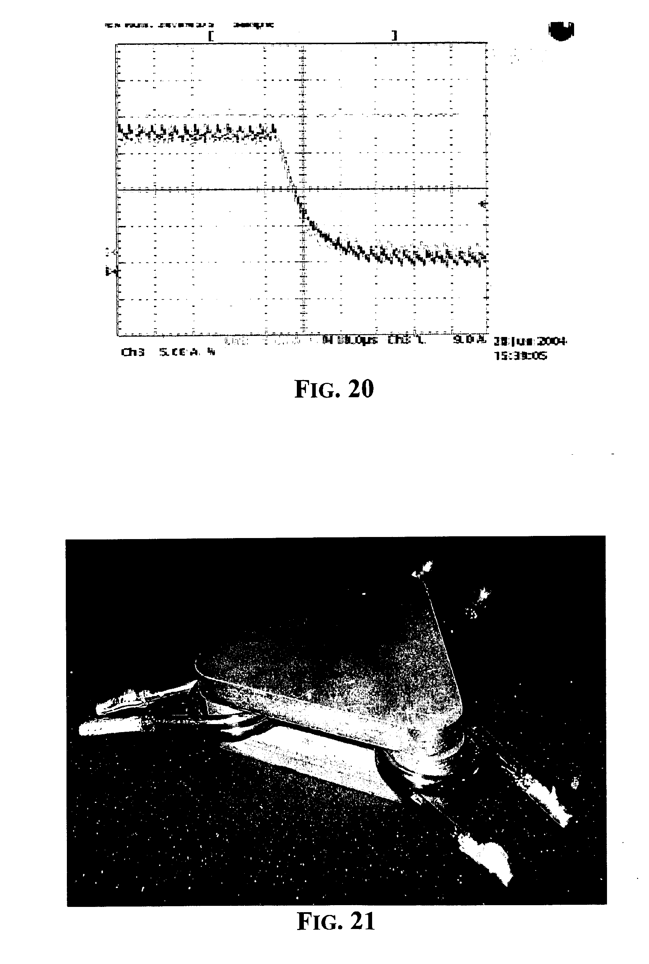

**Figure 21** is a photographic reproduction of the test sample.

DESCRIPTION OF EMBODIMENTS OF THE INVENTION

Figure 11 is a basic electrical diagram of a three phase synchronous buck converter employing one three phase coupled filter inductor of the present invention. The PWM signal that controls the turn on of the power switches of the three push-pull that drives the three output filter modules of the multiphase converter is applied to the three phase modules out phased by one third of a period between one phase and the next, in order to implement the interleaving condition.

Figure 12 shows a first embodiment of the core of this invention for realizing a three phase coupled filter inductor of this invention for realizing a three phase coupled filter inductor. Of course, the drawing shows one of the two matching parts that are eventually juxtaposed to close the magnetic circuit after forming the three phase coils around the three pillars or legs P1, P2, P3 of the core, spaced from the central pillar P4 all rising from a flat base portion B. The other part may either be identical or substantially similar to the part illustrated or may be different, for example it may be a flat planar piece replicating the shape and dimensions of the flat planar base portion of the part shown in the figure.

An alternative form of realization of the core of this invention is shown in Figure 13.

In the embodiment shown, the central leg or pillar P4 of the core has a larger cross sectional area compared to the angularly and radially spaced three legs or pillars P1, P2, P3 around which the turns of the coil conductor (wires) are wound (as depicted in the photographic sample reproduction of Figure 21 and the reluctance of the magnetic paths closing themselves through the central pillar P4 is reduced to provide for a certain magnetic coupling among these coils).

Generally, upon joining together the two parts or halves of the core, the three symmetrically spaced pillars of the three phase coils are without any appreciable air gap, while the center pillar has an are gap for sufficiently increasing the reluctance of the magnetic flux path through the center pillar of the core shared by all the three phase inductance coils such to determine a certain degree of magnetic coupling of each phase coil with the other two adjacent coils.

Figure 14 illustrates the magnetic flux paths in parallel that are provided by the magnetic core of this invention. The arrows show the direction of the magnetic fluxes within the magnetic core of the invention, for an orientation of the turns of the three phase coils such to determine an inverse (subtractive) coupling among the three phase coils.

Figure 15 is the equivalent passive electric network used for analyzing the relative reluctances of the various parallel magnetic flux paths in the core of this invention.

For the equivalent electric network of Figure 15, it may be derived that the equivalent reluctance seen by any of the phase coils will be given by the expression:

$$R_{eq} = \frac{R^2 + 3 \cdot R \cdot R_C}{2 \cdot R_C + R}$$

and the magnetic flux partition will be given by the following expression

$$P = \frac{R_C}{2 \cdot R_C + R}$$

The maximum coupling condition at which the partition P is equal to 0.5 is obtained when the reluctance of the central leg or pillar of the core assumes an infinite value (no magnetic flux through the central pillar of the core). The design of the reluctance $R_C$ of the central pillar of the core is preferably done by determining an appropriate air gap there along. This allows to design the center pillar of the core with a relatively large cross sectional area in order to avoid saturation phenomena in the central pillar of the core in consideration of the fact that the DC fluxes of all three phase coils sum themselves in the central pillar of the core and therefore by maintaining a sufficiently large cross section of the central pillar will reduce the flux density in the central pillar of the core.

Figure 16 illustrates a time-variant model of the structure according to which the behavior of the three phase coupled filter inductor of this invention is as if using three distinct (independent) phase filter inductors, the self inductance values of which though is not constant but changes depending on the state configuration of the three out-phased output voltages: $V_{PHASE1}$, $V_{PHASE2}$, and $V_{PHASE3}$, of the synchronous three phase interleaved buck converter, according to the three equations shown in correspondingly shaded fields.

The different values of inductance assumed by each phase coil of the three phase filter inductor of this invention are represented by the following three equivalent inductance values:

$L_{eq1}$ is the equivalent inductance of a phase coil being charged (ON), while the other two coils are OFF;

$L_{eq2}$ is the equivalent inductance of a phase coil when all the three coils of the multiphase coupled inductor are OFF;

$L_{eq3}$ is the equivalent inductance of a phase coil while in OFF state in the event a second phase coil of the trio is ON (as recognizable this is a little significant spurious condition)

The shadings of three different tonalities show the correspondences on the time scale for the out-phasing by 120° of the main PWM drive signal, while operating with a duty cycle up to 0.33%.

EXAMPLE

The advantages obtained with a three phase coupled inductor core have been proven by conducting a campaign of tests on a sample ferrite core of the type illustrated in Figure 12 and in the photographic reproduction of Figure 21.

The height of the equilateral triangular base was 1,163 mm. The thickness of the base portion and the height of the three angularly and radially spaced pillars were identical and equal to 0,150 mm. The diameter of the circular cross section of the three spaced pillars was 0,263 mm and the diameter of the center pillar was 0,526 mm (twice the diameter of the spaced phase coil pillars).

The three phase coils were identical and constituted by 1 full turn of 0.15 mm diameter copper wire.

The DC resistance of the coils was of 0,74 mΩ which is lower than that of filter inductances that are normally employed in similar types of applications.

For this example, the air gap in all the four pillar was of about 0.2 mm.

The switching frequency of each of the three out-phased waveforms was about 320 kHz producing a 960 kHz output ripple frequency.

Figure 17 offers a comparison between the waveforms of the current in the three phase coils of the multiphase coupled inductor and of the resulting output current drawn with continuous lines and those drawn with broken lines, relative to a condition of substantially absence of reverse magnetic coupling among the three phase coils (i.e. having a self inductance equivalent to $L_{eq2}$). It is evident that, for the same slope $di/dt$ at transients, in the case of magnetic coupling, the same output current waveform is obtained with a significantly reduced residual ripple.

Figure 18 shows the waveforms of the current in the three phase coils for a duty cycle inferior to 0.33%. Shown below the out-phased waveforms, the residual ripple on the output current is outstandingly uniform.

Because of the symmetry of the multiphase coupled filter inductor, from the waveforms could be derived the equivalent values of self inductance and of mutual inductance that are the same for each phase coil.

The two significant values of equivalent inductance were found to be:

$$L_{eq1} = 1.95 \mu H \quad (Iout = 0A) \quad 1.62 \mu H \quad (Iout = 60A)$$
$$L_{eq2} = 0.86 \mu H \quad (Iout = 0A) \quad 0.68 \mu H \quad (Iout = 60A)$$

Figure 19 shows a comparison between efficiency curves when employing the sample multiphase coupled inductor of the present invention and three uncoupled multiphase filter inductors of self inductance value equal to the equivalent self inductance value ($L_{eq2}$) of the coupled sample inductor.

By comparing the efficiency curves, it may be observed that the largest gain of efficiency is obtained at the low end of the range of load current absorptions, that is when the current ripple on the compared phase is still substantially related to the DC current. The improvement is larger than 10%, far greater than what is normally obtained with two coupled phase coils. The measured saturation current was greater than 80 A. From the reported equivalent self inductance values, it may be noticed that a modest saturation slightly modifies the performances of the coil, however the core characteristics are not affected and the current waveform does not change.

Figure 20 shows the waveforms of the current in the three coils during load transients. The output current change had an amplitude of 60A and occurred with a fixed slope of 93 A/μs. It is appreciable from the figure the outstanding uniformity of the three waveforms during transients.

Besides demonstrating a superior performance, the novel three-phase magnetic core of this invention permits to achieve enhanced reduction of footprint compared to the common E-shape cores. When implementing multiphase DC-DC buck converters of a larger number of phases, two or more three-phase cores may be used. Typically, the number of modules (phases) will be a multiple of three.

**Claims**

1. Three phase coupled inductor core of a low reluctance material consisting of two matching parts joined to create closed magnetic flux paths, at least one part having a planar base portion and four parallel pillars extending from a surface of the planar base, three of the pillars are spaced by a same radial distance, from the axis of a fourth pillar, centered on the planar base.

2. The three phase coupled inductor core of claim 1, wherein said three spaced pillars are angularly spaced by 120° from one another.

3. The three phase coupled inductor core of claim 1, wherein said central fourth pillar has an air gap therealong defined upon joining together the two matching parts.

4. The three phase coupled inductor core of claim 3, wherein said fourth central pillar has a cross sectional area larger than the cross sectional areas of said three spaced pillars.

5. The three phase coupled inductor core of claim 1, wherein said low reluctance material is ferrite.

6. A coupled three phase filter inductor for a synchronous interleaved multiphase DC-DC buck converter, including at least three phase coils wound on said three spaced pillars of the coupled inductor core of claim 1 and oriented in a way to establish an inverse magnetic coupling of any one of the three phase coils with the other two coils.

7. A synchronous interleaved multiphase DC-DC buck converter having plural output phase filter modules each comprising an output current filter inductance coil magnetically coupled with at least another output phase current filter inductance coil, **characterized in that** three phase filter inductance coils share a core according to any of the claims 1 to 5.

FIG. 1

FIG. 2

**FIG. 3**

Load transient

$(L_1)$

$\Delta D1$

$(L_2 = L_{cr})$

$\Delta D2$

$(L_3)$

$\Delta D3$

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

FIG. 14

FIG. 15

FIG. 16

FIG. 17

FIG. 18

FIG. 19

**FIG. 20**

**FIG. 21**

**European Patent Office**

**EUROPEAN SEARCH REPORT**

Application Number

EP 06 42 5172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATENT ABSTRACTS OF JAPAN vol. 2003, no. 12, 5 December 2003 (2003-12-05) -& JP 2006 032861 A (TDK CORP), 2 February 2006 (2006-02-02) | 1-5 | INV. H02M3/158 H01F1/00 H01F1/08 |
| Y | * abstract; figures 1a,1b,2,4 * * paragraphs [0018], [0026] * | 6,7 | |
| X | US 2005/237143 A1 (NAKAGAWA JUN ET AL) 27 October 2005 (2005-10-27) * paragraph [0062]; figure 6 * | 1,2,4 | |
| Y | US 6 023 154 A (MARTINEZ ET AL) 8 February 2000 (2000-02-08) | 6 | |
| A | * column 3, lines 19-33 * * column 2, lines 57-63; figures 2a,2b,3 * | 7 | |
| Y | US 4 384 321 A (RIPPEL ET AL) 17 May 1983 (1983-05-17) | 7 | TECHNICAL FIELDS SEARCHED (IPC) |
| A | * column 3, lines 51-58 * * column 4, paragraph 27-32 * * column 8, lines 13-34 * * column 2, lines 49-65 * | 6 | H02M H01F |
| A | EP 0 459 570 A (PHILIPS PATENTVERWALTUNG GMBH; N.V. PHILIPS' GLOEILAMPENFABRIEKEN) 4 December 1991 (1991-12-04) * abstract; figure 1 * | 1-7 | |

The present search report has been drawn up for all claims

| Place of search | Date of completion of the search | Examiner |
|---|---|---|
| Munich | 27 September 2006 | Jansen, Helma |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 42 5172

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2006

| Patent document cited in search report | | Publication date | Patent family member(s) | | Publication date |
|---|---|---|---|---|---|
| JP 2006032861 | A | 02-02-2006 | CN | 1725390 A | 25-01-2006 |
| US 2005237143 | A1 | 27-10-2005 | CN | 1691222 A | 02-11-2005 |
| | | | JP | 2005311155 A | 04-11-2005 |
| US 6023154 | A | 08-02-2000 | NONE | | |
| US 4384321 | A | 17-05-1983 | NONE | | |
| EP 0459570 | A | 04-12-1991 | DE | 4017323 A1 | 05-12-1991 |
| | | | JP | 4230009 A | 19-08-1992 |

EPO FORM P0459

For more details about this annex : see Official Journal of the European Patent Office, No. 12/82